# EUROPEAN PATENT APPLICATION

(11) **EP 1 854 677 A1**
(43) Date of publication of application: **14.11.2007**
(21) Application number: 06009431.5
(22) Date of filing: 08.05.2006
(51) Int. Cl.: B60R 19/48, B60R 19/18

(54) **Pedestrian impact detection device for a vehicle**

(71) Applicant: TRW Automotive GmbH, 73553 Alfdorf (DE); Mayser GmbH & Co. KG, 89073 Ulm (DE); Peugeot Citroen Automobiles SA, 78140 Vélizy-Villacoublay (FR)
(72) Inventor: Straub, Olaf, 73113 Ottenbach (DE); Kolb, Martin, 73529 Schwäbisch-Gmünd (DE); Seyffert, Martin, Dr., 72793 Pfullingen (DE); Korte, Karsten, 89284 Pfaffenhofen (DE); Schurr, Guido, 89185 Hüttisheim (DE); Periot, Stéphanie, 75014 Paris (FR); Sol, Bénédicte, 91190 Gif sur Yvette (FR)
(74) Representative: Strass, Jürgen

(57) **Abstract**

A pedestrian impact detection device for a vehicle comprises an absorber structure (10) to be arranged between a bumper beam and a bumper skin. The pedestrian impact detection device further comprises a sensor device (22) arranged on the absorber structure (10). The sensor device (22) includes a safety edge (24). The absorber structure includes a member (16) that is elastically displaceable. The safety edge (24) is located next to the elastically displaceable member (16). The sensor device (22) is mechanically connected to the elastically displaceable member (16).

## Description

The invention relates to a pedestrian impact detection device for a vehicle, comprising an absorber structure to be arranged between a bumper beam and a bumper skin, and a sensor device arranged on the absorber structure, the sensor device including a safety edge.

A pedestrian impact detection device of this kind is known from DE-A-10 2005 005 881. A tube-like safety edge is integrated into a rib-box of a vehicle bumper, the rib-box having portions with different stiffness.

Generally, when a safety edge is integrated into an absorber structure, it is to be considered that the safety edge might become dislocated under certain circumstances. If, for example, the vehicle bumper experiences a slight impact, the corresponding movement of an absorber portion next to the safety edge can cause a displacement of the safety edge. Once the safety edge is moved out of its original position, the functionality of the whole detection device might be affected.

The present invention provides a pedestrian impact detection device for a vehicle with a sensor device including a safety edge that remains in place in case of slight impacts.

According to the invention, in a pedestrian impact detection device of the kind mentioned above, the absorber structure includes a member that is elastically displaceable, the safety edge is located next to the elastically displaceable member, and the sensor device is mechanically connected to the elastically displaceable member. The connection of the sensor device to the elastically displaceable member ensures that the sensor device will return to its original position in case of an elastic displacement of the elastically displaceable member due to a slight impact on the vehicle bumper. Accordingly, the proper future function of the detection device is not affected.

An assembly with the elastically displaceable member being connected to the sensor device by a clip connection has proven to be of particular advantage. The clip connection significantly facilitates the mounting of the sensor device and also enables an easy dismounting.

In the preferred embodiment the absorber structure comprises a rib-box, and the elastically displaceable member has clip hooks latching in a clip channel of the sensor device. The rib-box has several ribs spaced in the transverse direction of the vehicle and extending in a vertical plane, and the clip hooks are arranged at transverse positions correlating with the transverse positions of the ribs. With this construction the clip connection can be configured quite rigid so as to prevent an inadvertent separation of the connection due to self-oscillation of the absorber structure caused by extreme driving conditions (like driving on a bumpy road, for example).

Further features and advantages of the invention will be apparent from the following description with the aid of the accompanying drawings. In the drawings.
- Figure 1 shows a pedestrian impact detection device according to the invention in a perspective view with a section between two ribs of the rib-box;
- Figure 2 shows a view similar to Figure 1 with a section through one of the ribs of the rib-box;
- Figure 3 shows an enlarged sectional view of a detail of the pedestrian impact detection device; and
- Figure 4 shows a perspective front view of the pedestrian impact detection device.

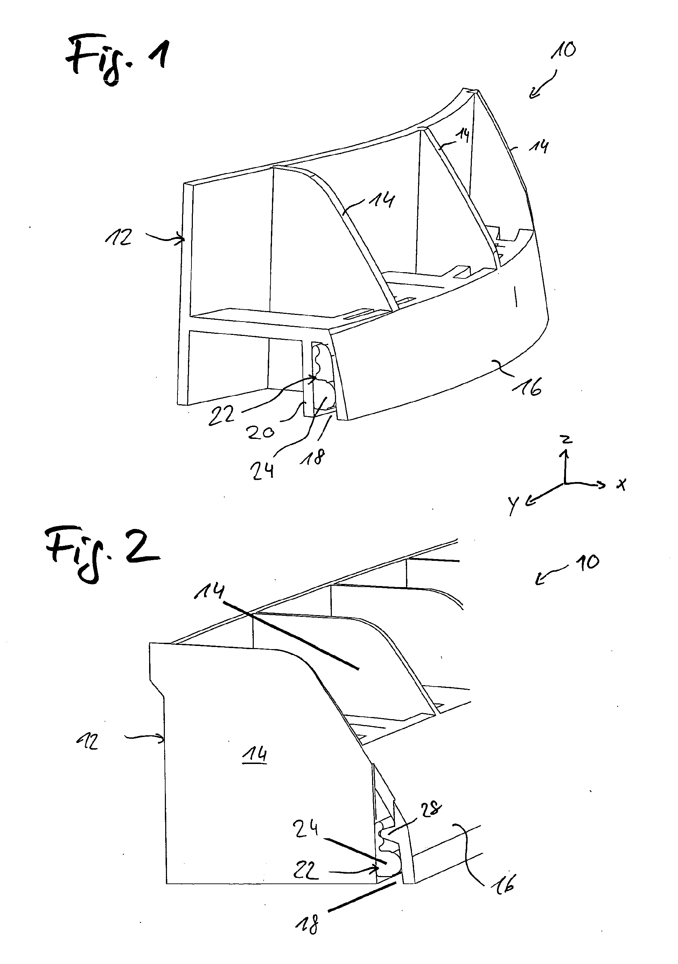

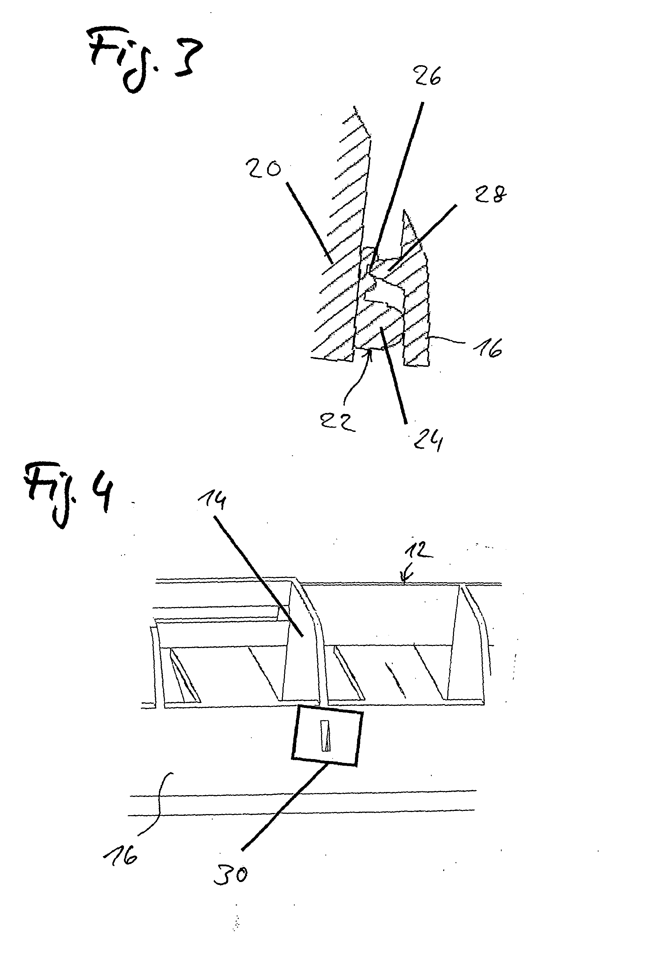

In Figures 1 and 2 an absorber structure 10 for a vehicle bumper is illustrated. The absorber structure 10 is substantially comprised of a rib-box 12 made of a suitable plastic material. The rib-box 12 is to be mounted on a bumper beam at one side and covered by an outer bumper skin at the opposite side. The vehicle bumper and the rib-box 12 basically extend in the transverse direction (y-direction) of the vehicle perpendicular to the longitudinal direction (x-direction). The rib-box 12 has several ribs 14 that extend in a vertical plane (x-z-plane). The ribs 14 are disposed over the transverse length of the rib-box 12 and are spaced from each other by a certain distance.

The rib-box 12 further includes a front wall 16 located close to the bumper skin, i.e. the front side of the vehicle. The front wall 16 is connected to the rib-box 12 at its upper end and thus represents a member of the absorber structure 10 that is elastically displaceable upon a slight impact (like a bumper contact during a parking manoeuvre). The front wall 16 may be formed in one piece with the rib-box 12 or it is connected thereto afterwards. The front wall 16 delimits one side of a channel 18, hereinafter referred to as sensor channel 18. The other side of the sensor channel 18 is delimited by a rigid portion 20 of the rib-box 12 (i.e. this portion 20 is not displaceable or deformable upon a slight impact). The sensor channel 18 is open on its lower side and extends in the y-direction. Since the front wall 16 is only connected at its upper end to the rib-box 12, the front wall 16 is swivable substantially in the x-direction.

The sensor channel 18 accommodates a sensor device 22 that is supported by the rigid portion 20 of the rib-box 12. On its opposite side the sensor device 22 is attached to the front wall 16 in a manner described further below. The sensor device 22 includes a tube-like safety edge 24 extending at least along the major part of the rib-box 12 in the y-direction. The safety edge 24 is an electric component and basically has the function of a switch. In case an actuating force is applied to an actuating surface of the safety edge 24, the safety edge 24 is deformed and a switching process takes place. A local deformation of the safety edge 24 is sufficient to initiate the switching process.

As can be seen in Figure 3, the safety edge 24 abuts the front wall 16, although this is not mandatory for the function of the sensor device 22. The sensor device 22 has a clip channel 26 extending in the y-direction. The clip channel 26 cooperates with several clip hooks 28 provided on the front wall 16. The clip hooks 28 are arranged at positions in the y-direction that correspond to the position of the ribs 14. The clip hooks 28 of the front wall 16 are in latching engagement with the clip channel 26 of the sensor device 22. Because of this mechanical connection of the sensor device 22 to the front wall 16, a fixed positional relationship between these components is ensured. When the elastically deformable front wall 16 is slightly displaced and then returns to its original position, the safety edge 24 will finally take its original position relative to the front wall 16, too.

The rib-box 12 and the sensor device 22 arranged in the sensor channel 18 together form a pedestrian impact detection device. The rib-box 12 basically has the function of absorbing the impact energy in case a pedestrian hits the vehicle bumper. In particular, the rib-box 12 will be deformed, thus transforming kinetic energy into heat. The sensor device 22 is actuated in that the front wall 16 is swiveled and exerts a pressure on the safety edge 24. When the actuating force is exceeded, the safety edge 24 performs a switching process that can be used to trigger a pedestrian safety means like a hood lifter. The sensor device may provide more sophisticated signaling functions in order to localize the point of impact and/or to determine the severity of the impact, for example.

As illustrated in Figure 4, the front wall 16 has openings 30 at positions in the y-direction that correspond to the positions of the clip hooks 28. The transverse dimensions of the openings 30 corresponds to the transverse dimensions of the clip hooks 28. Thus, it is ensured that the rib-box 12 can still be manufactured in a conventional manner with a two-piece tool.

Due to the geometric shape of the sensor channel 18 and the positioning of the clip connections, the sensor device 22 can be formed from a continuous profile which is produced in a continuous casting process, for example.

## Claims

1. Pedestrian impact detection device for a vehicle, comprising
an absorber structure (10) to be arranged between a bumper beam and a bumper skin, and
a sensor device (22) arranged on the absorber structure (10), the sensor device (22) including a safety edge (24), **characterized in that**
the absorber structure (10) includes a member (16) that is elastically displaceable,
the safety edge (24) is located next to the elastically displaceable member (16), and
the sensor device (22) is mechanically connected to the elastically displaceable member (16).

2. The pedestrian impact detection device according to claim 1, **characterized in that** the elastically displaceable member (16) is connected to the sensor device (22) by a clip connection.

3. The pedestrian impact detection device according to claim 1 or 2, **characterized in that** the sensor device (22) is accommodated in a sensor channel (18), one side of the sensor channel (18) being defined by a rigid portion (20) of the absorber structure (10) and another side being defined by the elastically displaceable member (16).

4. The pedestrian impact detection device according to claim 3, **characterized in that** the sensor device (22) is supported on the rigid portion (20) of the absorber structure (10).

5. The pedestrian impact detection device according to one of the preceding claims, **characterized in that** the elastically displaceable member (16) abuts the safety edge (24).

6. The pedestrian impact detection device according to one of the preceding claims, **characterized in that** the elastically displaceable member is a wall (16) connected to the absorber structure (10) at one end.

7. The pedestrian impact detection device according to any of the preceding claims, **characterized in that** the absorber structure (10) comprises a rib-box (12).

8. The pedestrian impact detection device according to claims 6 and 7, **characterized in that** the wall (16) of the sensor channel (18) is part of or coupled to the rib-box (12).

9. The pedestrian impact detection device according to one of the preceding claims, **characterized in that** the elastically displaceable member (16) has clip hooks (28) latching in a clip channel (26) of the sensor device (24).

10. The pedestrian impact detection device according to claim 7 or 8 and claim 9, **characterized in that** the rib-box (12) has several ribs (14) spaced in the transverse direction of the vehicle and extending in a vertical plane, the clip hooks (28) being arranged at transverse positions correlating with the transverse positions of the ribs (14).

11. The pedestrian impact detection device according to claims 6 and 10, **characterized in that** the wall (16) has openings (30) at transverse positions correlating with the transverse positions of the clip hooks (28).

12. The pedestrian impact detection device according to claim 11, **characterized in that** the transverse dimensions of the openings (30) corresponds to the transverse dimensions of the clip hooks (28).
